# EUROPÄISCHE PATENTSCHRIFT

(11) **EP 2 301 129 B1**
(45) Veröffentlichungstag und Bekanntmachung des Hinweises auf die Patenterteilung: **01.02.2012**
(21) Anmeldenummer: 09779541.3
(22) Anmeldetag: 26.05.2009
(51) Int. Cl.: H02J 3/14, H02J 13/00

(54) **STEUEREINRICHTUNG UND VERFAHREN ZUM STEUERN EINES AN EINE ENERGIEVERSORGUNG ANGESCHLOSSENEN GERÄTS**
CONTROLLER AND METHOD FOR CONTROLLING A DEVICE CONNECTED TO A POWER SUPPLY
DISPOSITIF DE COMMANDE ET PROCEDE DE COMMANDE D'UN APPAREIL CONNECTE A UNE ALIMENTATION EN ENERGIE

(30) Priorität: 09.07.2008 DE 102008040272
(43) Veröffentlichungstag der Anmeldung: 30.03.2011
(73) Patentinhaber: Robert Bosch GmbH, 70442 Stuttgart (DE)
(72) Erfinder: SCHULZE, Christian, Lehrte 31275 (DE); HERZOG, Martin, 31246 Lahstedt/Gadenstedt (DE)
(86) Internationale Anmeldenummer: PCT/EP2009/056342
(87) Internationale Veröffentlichungsnummer: WO 2010/003730

(56) Entgegenhaltungen:
- EP-A- 1 566 875
- WO-A-03/084022
- WO-A-2004/109914
- WO-A-2008/017754

## Beschreibung

### Stand der Technik

Die Erfindung geht aus von einer Steuereinrichtung und einem Verfahren zum Steuern eines an eine Energieversorgung angeschlossenen Geräts nach der Gattung der nebengeordneten Ansprüche.

Aus der JP 2000-270696 Abstract ist bereits eine automatische Wasser-Sprengvorrichtung bekannt, die mittels einer Solar-Energieversorgung betrieben wird. Ein Energiespeicher wird über eine Solarzelle aufgeladen. Der Betrieb der Wasser-Sprengvonichtung wird mit Erkennen eines Sonnenaufgangs initiiert.

Aus der WO 2008/017754 A2 ist ein Verfahren und eine Vorrichtung für die Echtzeitsteuerung von elektrischen Verbrauchern bekannt. Hierbei wird in einem Stromnetz an verschiedenen Stellen der Verbrauch gemessen und an eine zentrale Einheit übermittelt. Wird der Stromverbrauch im jeweiligen Netz so hoch, so kann die Zentraleinheit einzelne Verbraucher zeitweise vom Stromnetz nehmen, um eine Netzüberlastung zu verhindern.

### Offenbarung der Erfindung

### Vorteile der Erfindung

Die erfindungsgemäße Steuereinrichtung mit den Merkmalen des unabhängigen Anspruchs hat demgegenüber den Vorteil, dass eine Verwaltungseinrichtung eines Energieversorgungsnetzes einerseits und eine Steuereinrichtung zum Aktivieren eines Geräts oder zum Deaktivieren des Geräts räumlich getrennt angeordnet werden können, wobei die Aktivierung des Gerätes von einer Information über eine Energiebereitstellung abhängt Damit ist es möglich, durch die Verwaltungseinrichtung auch eine Vielzahl von Geräten an räumlich verschiedenen Orten anzusteuern und diesen Geräten, gegebenenfalls auch sequenziell oder nach einem vorgegebenen Zeitplan, eine Information über eine Energiebereitstellung zu geben, sodass verschiedene Geräte beispielsweise nacheinander betrieben werden können, um eine möglichst gleichmäßige Grundlast einerseits und eine Vermeidung von Spitzenlasten andererseits zu gewährleisten. Durch die über die Steuereinrichtung und die Verbindung der Steuereinrichtung mit der Verwaltungseinrichtung gewährleistete Regelung ist es somit möglich, dass seitens des Energieversorgungsnetzes gezielt Einfluss auf den Betrieb des Gerätes genommen werden kann, sodass die bereitgestellte Leistung und die abgerufene Leistung aneinander angepasst werden können.

Ferner ist es auch gemäß dem erfindungsgemäßen Verfahren zum Steuern eines an ein Energieversorgungsnetz angeschlossenen Gerätes vorteilhaft, dass der Energiebedarf von dem Gerät an die Verwaltungseinrichtung übermittelt wird, sodass auch seitens der Verwaltungseinrichtung eine entsprechende Anpassung von bereitgestellter Energie, gegebenenfalls auch zu einem geeigneten Zeitpunkt, gewährleistet werden kann. Wird eine Energiemenge von dem Gerät angefordert, so kann das Gerät über die Verwaltungseinrichtung und die Steuereinrichtung dann aktiviert werden, wenn diese Energiemenge in geeigneter Form oder zu einem geeigneten Zeitpunkt bereitsteht. Insgesamt ist es damit auf einfache Weise möglich, Energieverbraucher dann zu betreiben, wenn z.B. regenerative Energie Sonnenenergie oder Windenergie, an einer Energieversorgungseinheit ausreichend bereitsteht. Ferner ist es auch möglich, bei Energieverbrauchern, bei denen es auf einen exakten Zeitpunkt des Betriebes nicht ankommt, eine Aktivierung während einer Spitzenverbrauchszeit zu vermeiden.

Durch die in den abhängigen Ansprüchen aufgeführten Maßnahmen sind vorteilhafte Weiterbildungen und Verbesserungen der in den unhängigen Ansprüchen angegebenen Vorrichtung und des angegebenen Verfahrens möglich. So ist es vorteilhaft, ein Datenprotokoll zur Übertragung eines zeitlichen Beginns bzw. einer zeitlichen Dauer einer Energiebereitstellung und/oder eines Energiebedarfs zu übertragen. Hierdurch ist es insbesondere möglich, von dem Gerät der Versorgungseinheit mitzuteilen, bis wann gegebenenfalls unbedingt eine Versorgung eines Gerätes mit Energie erfolgen muss, damit dessen Funktionalität nicht gefährdet wird oder ein Benutzerwunsch nicht erfüllt werden kann. Hierdurch ist es möglich, dass selbst für den Fall, dass kein geeigneter Zeitpunkt für eine besonders günstige Energieentnahme bereitsteht, das Gerät dennoch in gewünschter Weise betrieben werden kann. Ferner ist es damit auch möglich, eine geeignete Anpassung an wechselnde Spitzen oder Versorgungssituationen, wie sie insbesondere im Bereich von regenerativen Energiequellen auftreten können, zu ermöglichen, ohne dass für einen Benutzer Nachteile entstehen.

In besonders einfacher Weise kann die Steuereinrichtung über den Anschluss an das Energieversorgungsnetz mit der Verwaltungseinrichtung Informationen austauschen. Hierdurch kann auf ein zusätzliches Informationsübertragungsmittel zwischen der Verwaltungseinrichtung und der Steuereinrichtung verzichtetet werden.

Ferner wird eine Bedieneinheit bereitgestellt über die eine bereitgestellte Energieart oder eine Mitteilung über den Energiebedarf ausgewählt werden kann. So kann von einem Benutzer mittels einer Eingabe über die Bedieneinheit verlangt werden, dass bei einem Anschluss an ein Stromnetz nur dann ein Betrieb des Gerätes erfolgen soll, wenn ausreichend Energie aus einer solaren Energieerzeugung zur Verfügung steht. Ferner ist es auch möglich, dass der Energieversorgungspreis vom Angebot an Energie abhängt. So kann eine entsprechende Information über einen aktuellen Energiepreis von der Verwaltungseinrichtung bereitgestellt werden. Über die Bedieneinheit kann ein Grenzpreis für Energie vorgegeben werden, sodass das Gerät nur dann eingeschaltet wird, wenn dieser Grenzpreis erreicht oder unterschritten wird.

Ferner weist die Steuereinrichtung vorteilhaft einen Speicher zum Speichern eines Identifikationscodes auf, der bei Bedarf an die Verwaltungseinrichtung übermittelt wird. Hiermit kann sich das Gerät gegenüber der Verwaltungseinrichtung identifizieren. Damit ist es beispielsweise möglich, den Energieverbrauch entsprechend der von dem Gerät angeforderten Energie, dem Zeitpunkt der Anforderung oder anderen Parametern von der Verwaltungseinrichtung aus abzurechnen. Ferner ist es möglich, dass die Verwaltungseinrichtung für einzelne Geräte Informationen über Prioritäten dieser Geräte bereithält und entsprechend eine Energiebereitstellung gemäß der vorgegebenen Prioritäten an die entsprechenden Geräte übertragen kann. Damit ist eine prioritätsabhängige Energiebereitstellung möglich, sodass beispielsweise Geräte, deren Betriebszeit kritisch ist, bei einem entsprechenden Energieangebot eher eine Energiebereitstellung signalisiert werden kann als anderen Geräten. So können diese Geräte früher eingeschaltet werden als andere Geräte, bei denen eine entsprechende Aktivierung auch zu einem späteren Zeitpunkt erfolgen kann.

Entsprechend ist es auch möglich, ein Gerät zu deaktivieren, wenn eine entsprechende Energie aktuell nicht mehr bereitgestellt werden kann, beispielsweise wenn die aktuelle Erzeugung regenerativer Energien für die gesamte Versorgung der an das Energieversorgungsnetz angeschlossenen, hierfür vorgesehenen Geräte nicht mehr ausreicht.

### Kurze Beschreibung der Zeichnungen

Ausführungsbeispiele der Erfindung sind in den Zeichnungen dargestellt und in der nachfolgenden Beschreibung näher erläutert.

### Es zeigen

Figur 1 ein Energieversorgungsnetz mit zwei an das Energieversorgungsnetz angeschlossenen erfindungsgemäßen Geräten sowie einer Verwaltungseinrichtung,
Figur 2 ein Gerät mit einer erfindungsgemäßen Steuereinrichtung,
Figur 3 ein Ausführungsbeispiel für einen erfindungsgemäßen Verfahrensablauf.

### Ausführungsformen der Erfindung

Die erfindungsgemäße Steuereinrichtung kann für beliebige Geräte verwendet werden können, die an verschiedenartige Energieversorgungsnetze angeschlossen werden. Dies können beispielsweise Heißwasserversorgungsnetze, Gasversorgungsnetze oder andere Versorgungsnetze sein, bei denen ein Energieträger in gasförmiger oder flüssiger Form einem Gerät zugeführt wird. Insbesondere ist die Verwendung einer erfindungsgemäßen Steuereinrichtung jedoch für Geräte vorteilhaft, die an ein Energieversorgungsnetz in Form eines Stromnetzes angeschlossen sind. Da eine Zwischenspeicherung von elektrischer Energie besonders aufwendig ist und verlustbehaftet bzw. nur eingeschränkt möglich ist, kann durch die Anpassung eines Gerätebetriebs an eine Energiebereitstellung sowohl eine Stromerzeugung als auch eine Stromnutzung besonders effizient erfolgen. Daher ist die vorliegende Erfindung im Folgenden am Beispiel eines Gerätes erläutert, dass eine erfindungsgemäße Steuereinrichtung aufweist und dass an ein Energieversorgungsnetz in Form eines Stromnetzes angeschlossen ist.

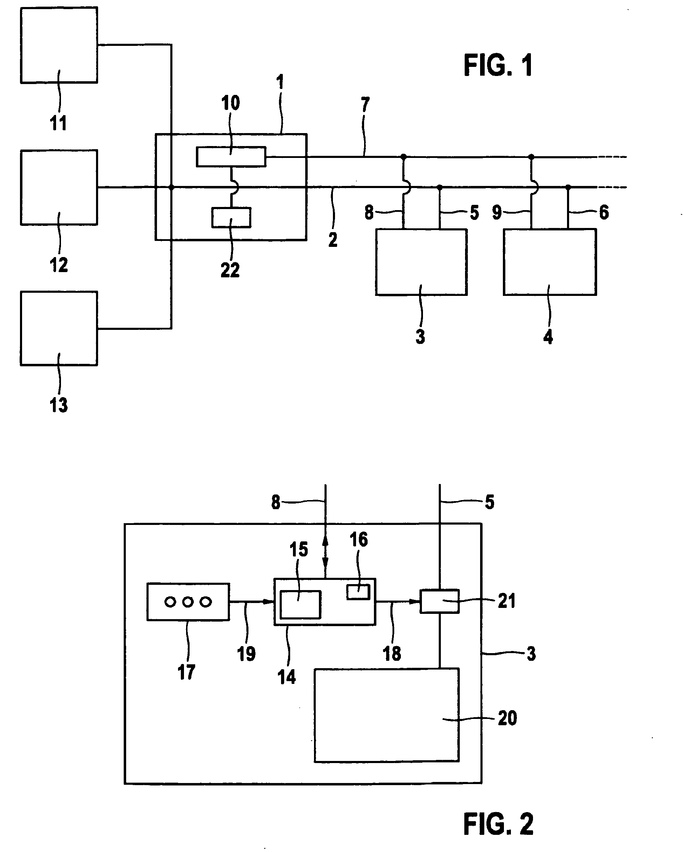

In der Figur 1 ist eine Verwaltungseinrichtung 1 gezeigt, die zur Verwaltung eines Stromnetzes 2 dient, an das ein erstes Gerät 3 und ein zweites Gerät 4 angeschlossen sind. Das Stromnetz 2 kann dabei einerseits ein häusliches Stromnetz sein, das in einer lokalen Umgebung Geräte mit elektrischer Energie versorgt. Ferner ist es aber auch möglich, dass die Verwaltungseinrichtung in einer Verteilerstation eines Stromversorgungswerkes angeordnet ist und die Geräte 3, 4 in möglicherweise auch unterschiedlichen Häusern und an unterschiedlichen Anschlussstellen eines Stromnetzes angeordnet sind, das beispielsweise einen zugehörigen Stadtteil versorgt. Die Geräte 3, 4 weisen jeweils Anschlüsse 5, 6 auf, über die sie mit dem Stromnetz 2 verbunden sind.

### Die Verwaltungseinrichtung 1 kann auf verschiedene

Energieerzeugungseinheiten 11, 12, 13 zugreifen. Beispielsweise ist die erste Energieerzeugungseinheit 11 als eine Photovoltaikanlage ausgeführt. Die zweite Energieerzeugungseinheit 12 ist beispielsweise als eine Windenergieanlage ausgeführt. Die dritte Energieerzeugungseinheit 13 ist beispielsweise als ein Verbrennungskraftwerk ausgeführt.

Die Verwaltungseinrichtung 1 weist eine Recheneinheit 10 auf, die in Abhängigkeit von der von den Energieerzeugungseinheiten 11, 12, 13 und/oder von der über das Stromversorgungsnetz 2 gegebenenfalls auch über andere, in der Figur nicht gezeigte Verbraucher gezogenen Leistung eine Information über eine Energiebereitstellung an zumindest die beiden an das Stromnetz 2 angeschlossenen Geräte 3, 4 übermittelt. Entsprechende Informationen können auch an andere, in der Figur nicht gezeigte, noch an das Stromnetz 2 angeschlossene Geräte übertragen werden. Ferner ist es auch möglich, dass an das Stromnetz 2 weitere Geräte angeschlossen sind, an die keine Informationen über eine Energiebereitstellung übertragen wird bzw. werden kann.

In einer ersten Ausführungsform ist eine zusätzliche Datenverbindung 7 vorgesehen, mit der eine Information über eine Energiebereitstellung jeweils an Anschlüsse 8, 9 der Geräte 3, 4 übertragen wird. Die zusätzliche Datenverbindung 7 kann beispielsweise als eine Telefonverbindung oder als eine Datennetzverbindung, beispielsweise ein Datennetzwerk, wie beispielsweise das Internet, ausgeführt sein. In einer weiteren Ausführungsform ist es auch möglich, dass die Leitungen des Stromversorgungsnetzes 2 für eine Übertragung der Information über eine Energiebereitstellung genutzt werden.

Die Funktionsweise einer erfindungsgemäßen Steuereinrichtung ist anhand der Figur 2 dargestellt. In der Figur 2 ist das Gerät 3 im Detail dargestellt. Das Gerät 3 weist einen Verbraucher 20 auf. Der Verbraucher 20 nutzt die übertragene elektrische Energie und ist beispielsweise als eine Waschmaschine, als ein elektrischer Speicherofen oder als eine Gefriertruhe ausgeführt. Es sind auch andere elektrische Geräte denkbar. Besonders vorteilhaft ist es derartige Geräte als einen Verbraucher 20 vorzusehen, bei denen zwar regelmäßig eine Leistung aus dem Stromnetz 2 entnommen werden muss, es aber auf einen exakten Zeitpunkt der Leistungsaufnahme nicht unbedingt ankommt.

Zwischen dem Verbraucher 20 und dem Anschluss 5 an das Stromnetz ist eine elektrische Schalteinheit 21 vorgesehen, die von einer erfindungsgemäßen Steuereinrichtung 14 angesteuert wird. Die Steuereinrichtung 14 steuert über eine Schnittstelle 18 die elektrische Schalteinheit 21 an und kann über die Ansteuerung des Schalters 21 die Energiezufuhr von dem Anschluss 5 an das Stromnetz 2 zu dem elektrischen Verbraucher 20 freigeben oder sperren, sodass es möglich ist, über eine Ansteuerung des Schalters 21 den Verbraucher 20 zu aktivieren oder zu deaktivieren. Hierzu weist die erfindungsgemäße Steuereinrichtung 14 eine Recheneinheit 15 auf, die Signale verarbeitet, die über den Dateneingang 8 von der Verwaltungseinrichtung 1 zur Verfügung gestellt werden. Wird der Steuereinrichtung 14 eine Energiebereitstellung signalisiert, so aktiviert die Steuereinrichtung 14 über Ansteuerung des Schalters 21 den Verbraucher 20, sodass das Gerät 3 automatisch aktiviert werden kann, ohne dass ein Benutzer nochmals eine gesonderte Aktivierung vornehmen muss.

In einer weiteren Ausführungsform ist es auch möglich, dass die Datenschnittstelle 8 bidirektional ausgeführt ist und dass ein Wunsch einer Energiebereitstellung von der Steuereinrichtung 14 über die Datenschnittstelle 8 an die Verwaltungseinrichtung 1 übertragen wird. Die Verwaltungseinrichtung 1 weiß nun, dass ein Gerät eine Energiebereitstellung wünscht und kann diesem Gerät über die Datenschnittstelle 8 eine Energiebereitstellung dann zu einem geeigneten Zeitpunkt mitteilen.

In einer Ausführungsform weist die Steuereinrichtung 14 eine Speichereinheit 16 auf, in der ein eindeutiger Identifikationscode des elektrischen Gerätes 3 bzw. der Steuereinrichtung 14 abgelegt ist. Wird dieser Identifikationscode an die Verwaltungseinrichtung 1 übermittelt, so kann beispielsweise festgestellt werden, welche Leistungsaufnahme das elektrische Gerät 3 bzw. der Verbraucher 20 hat, sodass dies entsprechend bei der Information über eine Energiebereitstellung berücksichtigt werden kann. Ferner ist es auch möglich, über die eindeutige Identifikation eine Information über die Energiebereitstellung nicht einer Vielzahl von an das Stromnetz 2 angeschlossenen Geräten zukommen zu lassen, sondern das elektrische Gerät 3 gezielt anzusprechen.

Weiterhin ist es vorteilhaft, die Steuereinrichtung 14 über eine Schnittstelle 19 mit einer Bedieneinheit 17 zu verbinden. Über die Bedieneinheit 17 ist beispielsweise ein Zeitpunkt vorwählbar, bis zu dem ein Betrieb des elektrischen Gerätes für eine vorgegebene Zeit erfolgt sein soll. So kann beispielweise vorgegeben werden, einen elektrischen Speicherofen bis zum nächsten Morgen 7 Uhr für wenigsten zwei Stunden mit elektrischer Energie zu versorgen. Erfolgt diese Eingabe beispielsweise am Vorabend um 18 Uhr, so kann ein geeigneter Zeitpunkt für eine Energiebereitstellung während der Nacht von der Verwaltungseinrichtung 1 ausgesucht werden. Spätestens um 5 Uhr morgens muss jedoch eine Aktivierung erfolgen, damit eine Aktivierung des Speicherofens für den gewünschten Mindestzeitraum erfolgen kann. Von der Verwaltungseinrichtung kann dann entweder ein Zeitraum während der Nacht ausgesucht werden, in der beispielsweise erwartungsgemäß mit einer niedrigen Leistungsentnahme durch Verbraucher zu rechnen ist oder in der beispielsweise ein besonders hoher Anteil an einer verfügbaren Energie beispielsweise von der Winderzeugungseinheit 12 bereitgestellt wird oder zu erwarten ist.

In einer anderen Ausführungsform ist es auch möglich, über die Bedieneinheit 17 eine Energiebereitstellung einer gewünschten Energieart vorzuwählen. So kann beispielsweise vorgewählt werden, dass eine Aktivierung eines Gerätes, wie beispielsweise einer Waschmaschine, dann erfolgen soll, wenn über die Solarenergieerzeugungseinheit 11 ausreichend elektrische Energie aus solarer Stromerzeugung zur Verfügung steht. Ein entsprechender Wunsch einer gewünschten Energieart kann von der Steuereinrichtung 14 über die Datenschnittstelle 8 an die Verwaltungseinrichtung 1 übertragen werden. Diese überprüft, wann ein ausreichender Energiebeitrag der Solarenergieerzeugungseinheit 11 bereitsteht und veranlasst daraufhin über eine entsprechende Energiebereitstellungsinformation an die Steuereinrichtung 14 damit eine Aktivierung des Verbrauchers 20, beispielsweise einer Waschmaschine, erfolgen kann.

In einer weiteren Ausführungsform ist es auch möglich, über die Bedieneinheit 17 eine Strompreisgrenze vorzusehen. Für den Fall, dass der Strompreis variabel ist und beispielsweise in Abhängigkeit vom aktuellen Verbrauch aller Teilnehmer bzw. von der Bereitstellungsquote natürlicher Energieressourcen insbesondere über die Solarenergieerzeugungseinheit 11 oder die Windenergieerzeugungseinheit 12 abhängt, kann so eine entsprechende Preisinformation über den aktuell verfügbaren Energiepreis von der Verwaltungseinrichtung 1 an die an das Energieversorgungsnetz angeschlossenen Geräte 3, 4 übertragen werden. Eine Aktivierung des Gerätes erfolgt dann, wenn der über die Bedieneinheit 17 vorgegebene Preis unterschritten wird.

Die Verwaltungseinrichtung 1 analysiert in einer ersten Ausführungsform die Energiemenge, die von den einzelnen Energieversorgungseinheiten 11, 12, 13 bereitgestellt wird. In einer bevorzugten Ausführungsform kann zusätzlich eine Aufschlüsselung nach den bereitgestellten Energiearten erfolgen. In einer weiteren Ausführungsform kann neben der aktuell zur Verfügung gestellten Energie auch eine Prognose verwendet werden, beispielsweise eine Wetterlage für die Bereitstellung von solarer Energie oder Windenergie. Ferner können Informationen über die Verbraucher herangezogen werden. Dies können beispielsweise Muster über die Verteilung von Spitzenlasten über einen typischen Tagesverlauf sein. Entsprechende Informationen werden von der Recheneinheit 10 der Verwaltungseinrichtung 1 verarbeitet. Steht ausreichend Energie bereit, so kann beispielsweise eine Information für eine Energiebereitstellung für derartige Geräte versendet werden, die typischerweise keinen genauen Aktivierungszeitpunkt benötigen, wie beispielsweise sogenannte Nachtspeicheröfen. In einer weiteren Ausführungsform ist es jedoch auch möglich, dass die Verwaltungseinrichtung 1 in einer Speichereinrichtung 22 Informationen darüber bereit hält, welche Geräte an das Stromversorgungsnetz 2 angeschlossen sind. Eine Aktivierung kann dann gezielt mit einer Informationsübertragung an das entsprechende Gerät erfolgen. Ferner ist es auch möglich, dass in dem Speicher 22 Informationen über einen Wunsch einer Energiebereitstellung zwischengespeichert werden, sodass entweder nach Vorgabe einer zeitlichen oder anderweitig vorgegebenen Prioritätenreichenfolge individuell einzelne Geräte aktiviert werden können.

In einer weiteren Ausführungsform ist es auch möglich, dass für den Fall, dass ein steigender Verbrauch erfasst wird und/oder dass eine bereitgestellte Energie der Energieversorgungseinheiten 11, 12 und/oder 13 zurückgeht, von der Verwaltungseinrichtung 1 eine Deaktiverung von an das Stromnetz 2 angeschlossenen Geräten durchgeführt wird. Somit kann beispielsweise verhindert werden, dass ein Kühlungsvorgang einer Kühleinrichtung zu einem Zeitpunkt eingeleitet oder fortgesetzt wird, zu dem ein besonders hoher Verbrauch vorliegt, wenn der entsprechende Kühlvorgang auch beispielsweise einen kurzen Zeitraum, z.B. 30 Minuten später, durchgeführt werden kann.

In einer anderen Ausführungsform ist es auch möglich, an das Stromnetz 2 seitens eines Benutzers statt eines Gerätes, das Strom verbraucht, auch ein Gerät anzuschließen, dass Energie für das Stromnetz bereitstellt, beispielsweise eine häusliche Photovoltaikanlage. In diesem Fall kann das Gerät wie eine Energieversorgungseinheit berücksichtigt werden.

Bei der Entscheidung der Verwaltungseinrichtung, eine Energie bereitzustellen, kann auch eine Information über den Ort der Energieerzeugung und den Ort des Energieverbrauchs berücksichtigt werden. So ist es beispielsweise damit möglich, Energieverbraucher und Energieerzeugungseinheiten so zu schalten, dass der Weg zwischen der Energieerzeugungseinheit und dem Ort des Energieverbrauchs möglichst minimiert wird. Hierdurch können Verluste, die bei einer Energieübertragung anfallen, berücksichtigt werden. Neben einem räumlichen Abstand kann bei der Ausführungsform eines Stromnetzes berücksichtigt werden, wie oft ein Umtransformieren der Spannung zwischen dem Ort des Energieerzeugers, und der Energieverbrauchseinheit erforderlich ist, da gerade bei einer Umtransformierung besonders hohe Verluste anfallen. Ferner kann bei der Strecke auch gewichtet werden, auf welcher Spannung ein Energietransport erfolgt, da im Hochspannungsbereich die Leitungsverluste geringer als bei einer Niederspannungs-Übertragung sind. Neben einer zeitlichen Anpassung kann damit auch eine räumliche Anpassung erfolgen. Die Orte des Energieverbrauchs sind dabei vorzugsweise in dem Speicher 22 den einzelnen Identifikationscodes der an das Stromnetz 2 angeschlossenen Geräte zugeordnet.

Um eine Informationsübertragung zwischen der Verwaltungseinrichtung und den Steuereinrichtungen der an das Energieversorgungsnetz angeschlossenen Geräte zu erleichtern, ist vorzugsweise ein einheitliches Datenprotokoll eingerichtet, bei dem an den verschiedenen Stellen eines Datensatzes eingetragen ist, wann eine elektrische Leistung angefordert wird, für welche Dauer eine Leistung angefordert wird und gegebenenfalls welchen Umfang die Gesamtleistungsaufnahme wahrscheinlich betragen wird. Weitere Informationen können entsprechend in das Protokoll aufgenommen werden. Durch ein entsprechend standardisiertes Datenprotokoll ist eine besonders effiziente und zuverlässige Übertragung der entsprechenden Daten möglich. Sollten zu einem späteren Zeitpunkt ergänzende Informationen, wie beispielsweise Informationen über eine Energieart oder über einen gewünschten Preis hinzugefügt werden, können diese an den bereits bestehenden Datensatz jeweils mit angehängt werden. Über das Datenprotokoll können auch entsprechende Informationen hinsichtlich der Priorität eines Energieverbrauchers übermittelt werden. So kann beispielsweise verhindert werden, dass besonders wichtige Energieverbraucher oder Energieverbraucher, deren Betrieb gerade in einem kritischen Stadium ist, nicht abgeschaltet werden. So kann beispielsweise bei einem Betrieb einer Waschmaschine sichergestellt werden, dass für den Fall, dass die Waschmaschine einmal aktiviert wurde, das entsprechende Waschprogramm auch für den Fall, dass eine Energiebereitstellung zu einem späteren Zeitpunkt nicht mehr in ausreichender Form vorliegt, abgearbeitet werden kann und keine Deaktivierung des Gerätes mehr erfolgt Dagegen wäre es beispielsweise möglich, bei einem Speicherofen einen Erwärmungsbetrieb von zwei Stunden auch beispielsweise nach einer Stunde zu unterbrechen, ohne dass einem Benutzer hierdurch ein Nachteil entstehen würde.

Neben den als beispielhaft angeführten Energieversorgungseinheiten Solarenergie, Windenergie oder Verbrennung eines Brennstoffs ist es auch möglich, andere Energieerzeuger, wie beispielweise Nuklearkraftwerke oder Wasserkraftwerke mit als Energieversorgungseinrichtungen einzubeziehen. Ferner ist es möglich, mehrere Verwaltungseinrichtungen dezentral in dem Stromnetz aufzustellen oder entsprechende Verwaltungseinrichtungen auch nur an zentralen Knoten- oder Schaltpunkten eines Stromversorgungsnetzes vorzuhalten.

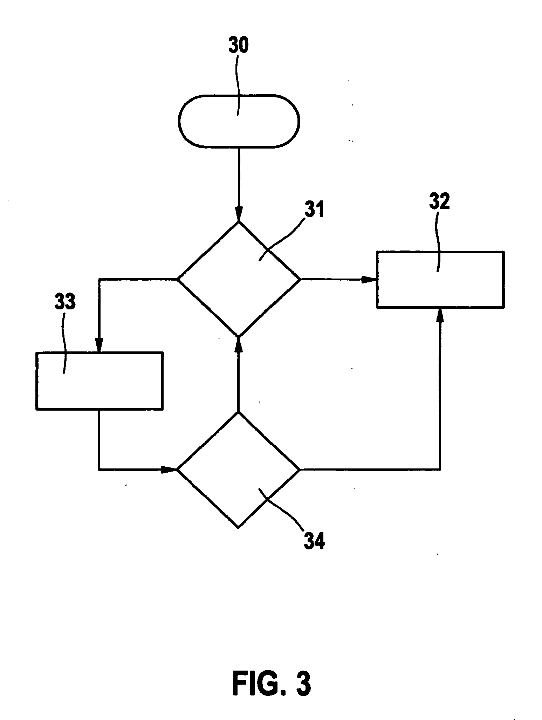

In der Figur 3 ist ein erfindungsgemäßer Verfahrensablauf gezeigt. Ausgehend von einem von einem Benutzer initialisierten Anfangsschritt 30, beispielsweise eines Einschaltens eines elektrischen Verbrauchers, wird das Verfahren gestartet. In einem ersten Prüfschritt 31 wird von der Steuereinrichtung abgefragt, ob eine entsprechende, positive Energiebereitstellungsinformation von der Verwaltungseinrichtung 1 vorliegt. In diesem Fall wird zu einem Betriebsschritt 32 verzweigt, indem ein Betrieb des an das Stromnetz angeschlossenen Geräts erfolgt. Andernfalls wird zu einem Anfrageschritt 33 verzweigt, in dem ein Energiebedarf von der Steuereinrichtung 14 von der Verwaltungseinrichtung 1 angefordert wird. In einem zweiten Prüfschritt 34 wird überprüft, ob gegebenenfalls ein Wunsch eines Benutzers vorhanden ist, das Gerät auch ohne eine ausdrückliche Information über eine Energiebereitstellung zu betreiben. Dies kann ein Benutzer beispielsweise durch eine Zeitvorgabe oder durch eine andere geeignete Eingabe sicherstellen, beispielsweise den Druck einer Taste zum Überstimmen einer Energiebereitstellungsinformation der Verwaltungseinrichtung 1. Liegt eine entsprechende Überstimmung vor, so wird ebenfalls zu dem Betriebsschritt 32 verzweigt. Liegt eine entsprechende Überstimmung nicht vor, so wird zu dem ersten Prüfschritt 31 zurückverzweigt und es wird darauf gewartet, dass eine entsprechende Energiebereitstellungsinformation von der Verwaltungseinrichtung 1 übermittelt wird, sodass das Gerät in diesem Fall angeschaltet werden kann.

## Patentansprüche

1. Steuereinrichtung (14) für ein Gerät (3, 4, 20), mit einer Schnittstelle (8, 9) zu einer Verwaltungseinrichtung (1) und mit einer Schnittstelle (18) zu einem Schalter (21) zum Aktivieren und zum Deaktivieren des Gerätes (3, 4, 20), wobei die Steuereinrichtung (14) in Abhängigkeit von einer von der Verwaltungseinrichtung (1) übertragenen Information über eine Energiebereitstellung das Gerät (3, 4, 20) über den Schalter (21) aktiviert oder deaktiviert, wobei die Steuereinrichtung (14) einen Anschluss (5) an ein Energieversorgungsnetz (2) aufweist, **dadurch gekennzeichnet, dass** eine Schnittstelle (19) zu einer Bedieneinheit (17) zur Auswahl einer bereitgestellten Energie derart vorhanden ist, dass eine Aktivierung des Geräts (3, 4, 20) über den Schalter (21) dann erfolgt, wenn ausreichend Energie aus einer solaren Energieerzeugung in dem Energieversorgungsnetz (2) zur Verfügung steht

2. Steuereinrichtung nach Anspruch 1, **dadurch gekennzeichnet, dass** die Steuereinrichtung (14) mit der Verwaltungseinrichtung (1) zum Übertragen eines aktuellen Energiebedarfs des Gerätes (3, 4, 20) an die Verwaltungseinrichtung (1) verbunden ist.

3. Steuereinrichtung nach einem der vorhergehenden Ansprüche, **dadurch gekennzeichnet, dass** zwischen der Steuereinrichtung (14) und der Verwaltungseinrichtung (1) ein Datenprotokoll zur Übertragung eines zeitlichen Beginns und/oder einer Dauer einer Energiebereitstellung und/oder eines Energiebedarfs vereinbart ist.

4. Steuereinrichtung nach einem der vorhergehenden Ansprüche, **dadurch gekennzeichnet, dass** eine Übertragung einer Energiebereitstellung oder eines Energiebedarfs über den Anschluss (5, 6) an das Energieversorgungsnetz (2) erfolgt.

5. Steuereinrichtung nach einem der vorhergehenden Ansprüche,
**gekennzeichnet durch** eine Schnittstelle (19) zu einer Bedieneinheit (17) zur Mitteilung eines Energiebedarfs an die Verwaltungseinrichtung (1), wobei über die Bedieneinheit (17) ein Zeitpunkt vorwählbar ist, bis zu dem ein Betrieb des elektrischen Geräts (3, 4, 20) für eine vorgegebene Zeit in jedem Fall erfolgen soll.

6. Steuereinrichtung nach einem der vorhergehenden Ansprüche, **gekennzeichnet durch** einen Speicher (16) zum Ablegen eines Identifikationscodes des Geräts (3) zur Übermittlung des Identifikationscodes an die Verwaltungseinrichtung (1).

7. Steuereinrichtung nach einem der vorhergehenden Ansprüche, **dadurch gekennzeichnet, dass** entsprechend einer von der Verwaltungseinrichtung (1) vorgegebenen Priorität für die einzelnen Geräte (3, 4, 20) eine Energiebereitstellung gemäß der vorgegebenen Prioritäten an die entsprechenden Geräte (3, 4, 20) übertragen wird

8. Verfahren zum Steuern eines an ein Energieversorgungsnetz (2) angeschlossenen Geräts (3, 4), wobei eine Energiebereitstellung zwischen einer Verwaltungseinrichtung (1) des Energieversorgungsnetzes (2) und dem an das Energieversorgungsnetz (2) angeschlossenen Gerät (3, 4) übertragen wird, **dadurch gekennzeichnet, dass** zwischen der Verwaltungseinnchtung (1) und dem Gerät (3, 4) eine Information über eine gewünschte und/oder eine bereitgestellte Energieart übertragen wird, dass das Gerät (3, 4) von der Verwaltungseinrichtung (1) in Abhängigkeit von der über das Energieversorgungsnetz (2) bereitstehenden Energieart derart aktiviert oder deaktiviert wird, dass eine Aktivierung des Geräts (3, 4, 20) über den Schalter (21) dann erfolgt, wenn ausreichend Energie aus einer solaren Energieerzeugung zur Verfügung steht.

9. Verfahren nach Anspruch 8, **dadurch gekennzeichnet, dass** zwischen der Verwaltungseinrichtung (1) und dem Gerät (3, 4) ein Beginn und/oder eine Dauer einer Energiebereitstellung und/oder ein Energiebedarf übertragen wird.

10. Verfahren nach einem der Ansprüche 8 bis 9, **dadurch gekennzeichnet, dass** eine Datenübertragung zwischen der Verwaltungseinrichtung (1) und dem elektrischen Gerät (3, 4) über das Energieversorgungsnetz (2) erfolgt.

## Claims

1. Controller (14) for an appliance (3, 4, 20), having an interface (8, 9) to a management device (1) and having an interface (18) to a switch (21) for activating and deactivating the appliance (3, 4, 20), the controller (14) activating or deactivating the appliance (3, 4, 20) via the switch (21) on the basis of an item of information which is transmitted by the management device (1) and relates to power provision, the controller (14) having a connection (5) to a power supply network (2), **characterized in that** an interface (19) to an operating unit (17) for selecting provided power is present in such a manner that the appliance (3, 4, 20) is activated via the switch (21) when sufficient power from solar power generation is available in the power supply network (2).

2. Controller according to Claim 1, **characterized in that** the controller (14) is connected to the management device (1) for the purpose of transmitting a current power requirement of the appliance (3, 4, 20) to the management device (1).

3. Controller according to one of the preceding claims, **characterized in that** a data protocol for transmitting a temporal start and/or a duration of power provision and/or a power requirement is agreed on between the controller (14) and the management device (1).

4. Controller according to one of the preceding claims, **characterized in that** power provision or a power requirement is transmitted to the power supply network (2) via the connection (5, 6).

5. Controller according to one of the preceding claims, **characterized by** an interface (19) to an operating unit (17) for communicating a power requirement to the management device (1), the operating unit (17) being able to be used to preselect a time until which the electrical appliance (3, 4, 20) is intended to be operated for a predefined time in any case.

6. Controller according to one of the preceding claims, **characterized by** a memory (16) for storing an identification code of the appliance (3) for the purpose of transmitting the identification code to the management device (1).

7. Controller according to one of the preceding claims, **characterized in that**, in accordance with a priority for the individual appliances (3, 4, 20) which is predefined by the management device (1), power provision according to the predefined priorities is transmitted to the corresponding appliances (3, 4, 20).

8. Method for controlling an appliance (3, 4) connected to a power supply network (2), power provision being transmitted between a management device (1) of the power supply network (2) and the appliance (3, 4) connected to the power supply network (2), **characterized in that** an item of information relating to a desired and/or provided type of power is transmitted between the management device (1) and the appliance (3, 4), **in that** the appliance (3, 4) is activated or deactivated by the management device (1) on the basis of the type of power available via the power supply network (2) in such a manner that the appliance (3, 4, 20) is activated via the switch (21) when sufficient power from solar power generation is available.

9. Method according to Claim 8, **characterized in that** a start and/or a duration of power provision and/or a power requirement is/are transmitted between the management device (1) and the appliance (3, 4).

10. Method according to either of Claims 8 and 9, **characterized in that** data are transmitted between the management device (1) and the electrical appliance (3, 4) via the power supply network (2).

## Revendications

1. Dispositif de commande (14) pour un appareil (3, 4, 20), comprenant une interface (8, 9) vers un dispositif de gestion (1) et comprenant une interface (18) vers un commutateur (21) pour activer et pour désactiver l'appareil (3, 4, 20), le dispositif de commande (14) activant ou désactivant l'appareil (3, 4, 20) par le biais du commutateur (21) en fonction d'une information sur une mise à disposition d'énergie transmise par le dispositif de gestion (1), le dispositif de commande (14) présentant un raccordement (5) à un réseau d'alimentation en énergie (2), **caractérisé en ce qu'**il existe une interface (19) vers une unité de commande (17) pour sélectionner une énergie mise à disposition de telle sorte qu'une activation de l'appareil (3, 4, 20) par le biais du commutateur (21) a lieu lorsque suffisamment d'énergie provenant d'une source d'énergie solaire est disponible dans le réseau d'alimentation en énergie (2).

2. Dispositif de commande selon la revendication 1, **caractérisé en ce que** le dispositif de commande (14) est relié avec le dispositif de gestion (1) pour transmettre un besoin en énergie actuel de l'appareil (3, 4, 20) au dispositif de gestion (1).

3. Dispositif de commande selon l'une des revendications précédentes, **caractérisé en ce qu'**entre le dispositif de commande (14) et le dispositif de gestion (1) est convenu un protocole de données pour la transmission d'un début dans le temps et/ou d'une durée d'une mise à disposition d'énergie et/ou d'un besoin en énergie.

4. Dispositif de commande selon l'une des revendications précédentes, **caractérisé en ce qu'**une transmission d'une mise à disposition d'énergie ou d'un besoin en énergie s'effectue par le biais du raccordement (5, 6) au réseau d'alimentation en énergie (2).

5. Dispositif de commande selon l'une des revendications précédentes, **caractérisé par** une interface (19) vers une unité de commande (17) en vue de communiquer un besoin en énergie au dispositif de gestion (1), un moment jusqu'auquel doit avoir lieu dans tous les cas un fonctionnement de l'appareil (3, 4, 20) électrique pendant une durée prédéfinie pouvant être présélectionné par le biais de l'unité de commande (17).

6. Dispositif de commande selon l'une des revendications précédentes, **caractérisé par** une mémoire (16) pour stocker un code d'identification de l'appareil (3) en vue de transmettre le code d'identification au dispositif de gestion (1).

7. Dispositif de commande selon l'une des revendications précédentes, **caractérisé en ce que** conformément à une priorité prédéfinie par le dispositif de gestion (1) pour les appareils (3, 4, 20) individuels, une mise à disposition d'énergie est transmise aux appareils (3, 4, 20) correspondants en fonction des priorités prédéfinies.

8. Procédé de commande d'un appareil (3, 4) raccordé à un réseau d'alimentation en énergie (2), une mise à disposition d'énergie étant transmise entre un dispositif de gestion (1) du réseau d'alimentation en énergie (2) et l'appareil (3, 4) raccordé au réseau d'alimentation en énergie (2), **caractérisé en ce qu'**une information sur un type d'énergie souhaitée et/ou mise à disposition est transmise entre le dispositif de gestion (1) et l'appareil (3, 4), **en ce que** l'appareil (3, 4) est activé ou désactivé par le dispositif de gestion (1) en fonction du type d'énergie mise à disposition par le biais du réseau d'alimentation en énergie (2), **en ce qu'**une activation de l'appareil (3, 4, 20) est effectuée par le biais du commutateur (21) lorsque suffisamment d'énergie provenant d'une source d'énergie solaire est disponible.

9. Procédé selon la revendication 8, **caractérisé en ce qu'**un début et/ou une durée d'une mise à disposition d'énergie et/ou d'un besoin en énergie sont transmis entre le dispositif de gestion (1) et l'appareil (3, 4).

10. Procédé selon l'une des revendications 8 et 9, **caractérisé en ce qu'**une transmission de données entre le dispositif de gestion (1) et l'appareil (3, 4) électrique est réalisée par le biais du réseau d'alimentation en énergie (2).
